# EUROPÄISCHE PATENTSCHRIFT

(11) **EP 4 143 453 B1**
(45) Veröffentlichungstag und Bekanntmachung des Hinweises auf die Patenterteilung: **01.10.2025**
(21) Anmeldenummer: 21717811.0
(22) Anmeldetag: 06.04.2021
(51) Int. Cl.: F16D 3/78, F16D 3/62, F16D 3/72

(54) **BEWEGLICHE DOPPELKUPPLUNG ZUM VERSATZAUSGLEICHENDEN VERBINDEN ZWEIER WELLEN**
YIELDING DOUBLE COUPLING FOR CONNECTING TWO SHAFTS WITH OFFSET COMPENSATION
ACCOUPLEMENT DOUBLE EXTENSIBLE POUR LE RACCORDEMENT DE DEUX ARBRES AVEC COMPENSATION DE DÉCALAGE

(30) Priorität: 30.04.2020 DE 102020203864
(43) Veröffentlichungstag der Anmeldung: 08.03.2023
(73) Patentinhaber: ZF Friedrichshafen AG, 88046 Friedrichshafen (DE)
(72) Erfinder: KETTLITZ, Mario, 88250 Weingarten (DE)
(74) Vertreter: ZF Friedrichshafen AG
(86) Internationale Anmeldenummer: PCT/EP2021/058901
(87) Internationale Veröffentlichungsnummer: WO 2021/219328

(56) Entgegenhaltungen:
- EP-A1- 0 173 814
- CA-A- 460 222
- DE-A1- 102012 002 660
- DE-A1- 102014 018 842
- DE-B- 1 284 710
- JP-Y1- S4 414 806
- US-A- 1 546 755
- US-A- 5 176 575

## Beschreibung

Die vorliegende Erfindung betrifft eine nicht schaltbare Ausgleichskupplung zum versatzausgleichenden Verbinden zweier Wellen, insbesondere für den Einsatz in einem Antriebsstrang eines Schienenfahrzeugs.

Insbesondere in teilabgefederten Antriebssträngen von Schienenfahrzeugen werden nicht schaltbare Ausgleichskupplungen zwischen einer Antriebswelle eines elektrischen Antriebsmotors und einer Getriebeeingangswelle eines Radsatzgetriebes angeordnet, um das Antriebsdrehmoment des Antriebsmotors auf das Radsatzgetriebe zu übertragen. Diese Anordnung wird antriebsseitiger Einsatz genannt. Dabei ist der Antriebsmotor in der Regel an einem gefederten Drehgestell des Schienenfahrzeugs aufgehängt, während das Radsatzgetriebe als achsreitendes Getriebe ausgeführt ist und sich direkt auf einer ungefederten Achswelle, der Radsatzwelle, abstützt. Aufgrund dieser teilabgefederten Anordnung von Antriebsmotor und Radsatzgetriebe ergeben sich im Fahrbetrieb Relativbewegungen des gefederten Elektromotors gegenüber dem ungefederten Radsatzgetriebe. Die dadurch verursachten Versätze zwischen der Antriebswelle und der Getriebeeingangswelle im Fahrbetrieb können durch die Ausgleichskupplung ausgeglichen werden. Zwischen dem Antriebsmotor und dem Radsatzgetriebe ist in der Regel sehr wenig Bauraum vorhanden, sodass eine Ausgleichskupplung insbesondere in axialer Richtung möglichst geringe Abmessungen aufweisen muss.

Aus der DE 10 2012 002 660 A1 ist eine Ausgleichskupplung zum versatzausgleichenden Verbinden zweier Wellen für den antriebsseitigen Einsatz in einem Schienenfahrzeug bekannt. Diese Ausgleichskupplung umfasst einen ersten und einen zweiten Flansch sowie einen ersten und einen zweiten Laschensatz. Zwischen dem ersten und dem zweiten Laschensatz ist ein Zwischenstück angeordnet. Jeder der beiden Laschensätze ist mittels Schraubbolzen mit einem jeweils zugeordneten Flansch und mit dem Zwischenstück verbunden.

Weitere Ausgleichskupplungen mit einem zwischen elastischen Ausgleichselementen angeordneten Mittelstück sind aus den Dokumenten CA 460 222 A, US 1 546 755 A, JP S44 14806 Y1, EP 0 173 814 A1, DE 12 84 710 B und DE 10 2014 0188842 A1 bekannt.

Aus der US 5 176 575 A ist ferner eine Ausgleichskupplung gemäß dem Oberbegriff von Anspruch 1 bekannt.

Die Aufgabe der vorliegenden Erfindung ist es, eine Ausgleichskupplung zum versatzausgleichenden Verbinden zweier Wellen zu schaffen, die insbesondere im Hinblick auf einen einfachen Aufbau sowie eine einfache Montage und Demontage weiter verbessert ist.

Diese Aufgabe wird durch eine Ausgleichskupplung mit den Merkmalen von Anspruch 1 gelöst. Vorteilhafte Ausführungen sind in den abhängigen Ansprüchen angegeben.

Es wird eine Ausgleichskupplung zum versatzausgleichenden Verbinden zweier Wellen, insbesondere für den antriebsseitigen Einsatz in einem Schienenfahrzeug, vorgeschlagen. Die Ausgleichskupplung umfasst einen ersten Verbindungsflansch zur Verbindung mit einer Antriebswelle und ein erstes elastisches Ausgleichselement, das mit dem ersten Verbindungsflansch verbunden ist. Die Ausgleichskupplung umfasst ferner einen zweiten Verbindungsflansch zur Verbindung mit einer getriebenen Welle und ein zweites elastisches Ausgleichselement, das mit dem zweiten Verbindungsflansch verbunden ist. Schließlich umfasst die Ausgleichskupplung ein Mittelstück, welches zwischen dem ersten und dem zweiten elastischen Ausgleichselement angeordnet und mit diesen verbunden ist. Die Ausgleichskupplung verbindet die Antriebswelle mit der getriebenen Welle, sodass im Betrieb eine Antriebsleistung in Form von Drehmoment und Drehbewegung von der Antriebswelle auf die getriebene Welle übertragen wird.

Die Ausgleichskupplung dient insbesondere der Übertragung eines Antriebsdrehmoments eines Antriebsmotors auf ein Radsatzgetriebe eines Schienenfahrzeugs. Dabei kann die Ausgleichskupplung Versätze, das heißt Verlagerungen zwischen der Antriebswelle und der getriebenen Welle in axialer und in radialer Richtung sowie Winkelverlagerungen, ausgleichen. Bei der Antriebswelle kann es sich um die Rotorwelle eines elektrischen Antriebsmotors handeln oder um ein mit der Rotorwelle verdrehfest verbundenes Bauteil. Die getriebene Welle kann die Getriebeeingangswelle eines Radsatzgetriebes sein oder eine mit der Getriebeeingangswelle verdrehfest verbundenes Bauteil.

Das erste elastische Ausgleichselement ist mittels erster Flanschverschraubungen mit dem ersten Verbindungsflansch und mittels erster Mittelstückverschraubungen mit dem Mittelstück verbunden. **In** dementsprechender Weise ist das zweite elastische Ausgleichselement mittels zweiter Flanschverschraubungen mit dem zweiten Verbindungsflansch und mittels zweiter Mittelstückverschraubungen mit dem Mittelstück verbunden. Das Mittelstück verbindet also die beiden elastischen Ausgleichselemente miteinander. Die Verbindungsflansche und die Mittelstückelemente sind vorzugsweise zumindest annähernd starre Bauteile, sodass der erforderliche Versatzausgleich durch Verformungen der elastischen Ausgleichselemente bewirkt wird.

Es ist des Weiteren vorgesehen, dass einer Flanschverschraubung jeweils eine Mittelstückverschraubung gegenüberliegt. **In** axialer Richtung sind demnach jeweils eine Flanschverschraubung und eine Mittelstückverschraubung hintereinander angeordnet. Dabei kann insbesondere jeweils eine Flanschverschraubung zumindest annähernd koaxial zu einer Mittelstückverschraubung angeordnet sein. Die Koaxialität der einander gegenüberliegenden Verschraubungen wird während der Rotation der Ausgleichskupplung zumindest zeitweise insofern aufgehoben, dass sich die Mittelstückverschraubungen zusammen mit den elastischen Ausgleichselementen relativ zu den beiden Verbindungsflanschen bewegen. Die Mittelstückverschraubungen bilden daher Lospunkte, die sich aufgrund der Beweglichkeit der elastischen Ausgleichselemente mit bewegen können. Dadurch wird der erforderliche Versatzausgleich zwischen der Antriebswelle und der getriebenen Welle ermöglicht.

Die Flanschverschraubungen bilden dagegen Festpunkte, weil die elastischen Ausgleichselemente mittels der Flanschverschraubungen an dem jeweils zugeordneten Verbindungsflansch befestigt sind und der jeweilige Verbindungsflansch mit der zugeordneten Antriebswelle bzw. getriebenen Welle jeweils fest verbunden ist. Dadurch können sich die Flanschverschraubungen relativ zu der jeweils zugeordneten Welle nicht bewegen. Es können sich demnach jeweils ein Lospunkt in Form einer Mittelstückverschraubung und ein Festpunkt in Form einer Flanschverschraubung gegenüberliegen. Als Bezug für die sich gegenüberliegenden Verschraubungen kann eine Mittelstückebene dienen. Die Mittelstückebene ist eine gedachte Ebene, die orthogonal zu einer Rotationsachse des Mittelstücks angeordnet ist und in axialer Richtung zumindest annähernd mittig durch das Mittelstück verläuft.

Vorzugsweise ist ferner vorgesehen, dass die ersten Flanschverschraubung und die ersten Mittelstückverschraubungen sowie die zweiten Flanschverschraubungen und die zweiten Mittelstückverschraubung in Umfangsrichtung jeweils abwechselnd angeordnet sind. Auf diese Weise wird ein verbessertes Schwingungsverhalten und folglich eine möglichst gleichmäßige und geringe Belastung der einzelnen Bauteile erreicht.

Das Mittelstück besteht aus mehreren Mittelstückelementen. Es weist also zumindest ein erstes Mittelstückelement und ein zweites Mittelstückelement auf. Das Mittelstück kann beispielsweise zweiteilig ausgeführt sein, also nur aus dem ersten und zweiten Mittelstückelement bestehen. Ein mehrteiliges Mittelstück kann geteilt und wieder zusammengesetzt werden, sodass die Ausgleichskupplung auch im eingebauten Zustand in zwei Kupplungshälften trennbar ist. Dies kann insbesondere zur Montage, Demontage und bei Wartungsarbeiten an der Ausgleichskupplung oder an anderen Elementen des Antriebsstrangs vorteilhaft sein. Die beiden Mittelstückelemente sind mittels der ersten und der zweiten Mittelstückverschraubungen miteinander verbunden. Erfindungsgemäß verbinden die Mittelstückverschraubungen zugleich zumindest drei Einzelteile miteinander, nämlich eines der beiden elastischen Ausgleichselemente, das erste Mittelstückelement und das zweite Mittelstückelement. Auf diese Weise kann eine einfach aufgebaute Ausgleichskupplung geschaffen werden, die leicht montierbar ist.

Erfindungsgemäß weisen das erste Mittelstückelement und das zweite Mittelstückelement formschlüssig ineinanderpassende Formschlusselemente auf. Die Formschlusselemente können beispielsweise als zueinander passende Zapfen und Senkungen oder als

Ausnehmungen und Vorsprünge ausgeführt sein. Beispielsweise durch Verdrehen der beiden Mittelstückelemente gegeneinander können die Formschlusselemente zur Deckung gebracht und danach ineinandergeschoben werden, sodass sie einen Formschluss bilden. Der damit erzielte Formschluss zwischen den beiden Mittelstückelementen ermöglicht ein hohes übertragbares Drehmoment. Die Mittelstückverschraubungen, welche die einzelnen Mittelstückelemente zusammenhalten können durch die Formschlusselemente entlastet werden. Insbesondere unterliegen die genannten Verschraubungen keiner oder nur einer reduzierten Scherbeanspruchung.

Die genannten Formschlusselemente sind bevorzugt so ausgeführt, dass der Formschluss durch axiales Auseinanderschieben der beiden Mittelstückelemente trennbar ist. Bei dem axialen Auseinanderschieben werden die elastischen Ausgleichselemente axial verformt. Die Formschlusselemente sind derart ausgeführt, dass der Federweg der elastischen Ausgleichselemente ausreicht, um den Formschluss zu lösen. Dazu reicht typischerweise ein Federweg von wenigen Millimetern aus, beispielsweise im Bereich von 2 bis 10 Millimetern. Die beiden Mittelstückelemente können zunächst in axialer Richtung auseinandergezogen und danach auch in radialer Richtung gegeneinander verschoben werden. So lässt sich beispielsweise ein antriebsseitiger Teil des Antriebsstrangs mit einer antriebsseitigen Kupplungshälfte von einem abtriebsseitigen Teil des Antriebsstrangs mit einer abtriebsseitigen Kupplungshälfte trennen. Die formschlüssigen Ausnehmungen und Vorsprünge und deren Abmessungen können mit der Elastizität der elastischen Ausgleichselemente abgestimmt sein, sodass eine einfache Trennung der beiden Kupplungshälften möglich ist.

Die Abmessung und die Form der Formschlusselemente können vom Fachmann für die konkrete Anwendung so festgelegt werden, dass über den dadurch erzielten Formschluss ein gefordertes maximales Drehmoment übertragbar ist.

Gemäß einer weiteren, vorteilhaften Ausführung können das erste Mittelstückelement und das zweite Mittelstückelement identisch ausgebildet sein. Diese Ausführung erleichtert die Herstellung und reduziert Produktions- und Lagerhaltungskosten.

Erfindungsgemäß weisen das erste Mittelstückelement und das zweite Mittelstückelement jeweils in Umfangsrichtung abwechselnd Durchgangsbohrungen und Gewindebohrungen für die Mittelstückverschraubungen auf. Die Durchgangsbohrungen und die Gewindebohrungen der beiden Mittelstückelemente sind in ihrer Lage und Abmessung so aufeinander abgestimmt, dass Schrauben in die Gewindebohrungen des einen Mittelstückelements eingeschraubt werden können, wobei die Schrauben durch eine Buchse des elastischen Ausgleichselements und durch die Durchgangsbohrung des anderen Mittelstückelements gesteckt sind und so die beiden Mittelstückelemente so zusammenhalten. Gleichzeitig verbinden die Schrauben somit das jeweilige elastische Ausgleichselement mit den beiden Mittelstückelementen. Die Schrauben und die genannten Gewindebohrungen bilden somit die wesentlichen Elemente der Mittelstückverschraubungen. Zusätzlich können die Mittelstückverschraubungen auch Unterleg- und/oder Sicherungsscheiben umfassen.

Eine weitere Ausführungsform sieht vor, dass das erste Mittelstückelement und das zweite Mittelstückelement jeweils zumindest annähernd polygonförmig ausgestaltet sind. Dadurch ergibt sich eine besonders leichte und materialsparende Bauweise bei verhältnismäßig hoher Drehmomentübertragbarkeit. In den Eckbereichen jedes polygonförmigen Mittelstückelements kann jeweils eine der genannten Durchgangsbohrungen oder eine der genannten Gewindebohrungen für eine der Mittelstückverschraubungen angeordnet sein.

Die beiden elastischen Ausgleichselemente sind als Gelenkscheiben ausgeführt.

Derartige Gelenkscheiben werden auch Hardyscheiben genannt. Erfindungsgemäß sind die elastischen Ausgleichselemente jeweils als eine fadenverstärkte Elastomerscheibe aus
-geführt. Bei den fadenverstärkten Elastomerscheiben können Fadenschlingen in einem Elastomerkörper eingebettet sein, wobei die Fadenschlingen den überwiegenden Teil der Last bei der Drehmomentübertragung aufnehmen. Der Elastomerkörper kann die Fadenschlingen zusammenhalten bzw. in einer gewünschten Position halten sowie vor äußeren Einflüssen schützen. Im Vergleich zu herkömmlichen elastischen Ausgleichselementen, beispielsweise Metalllaschen, haben fadenverstärkte Ausgleichselemente mit einem Elastomerkörper den Vorteil, dass sie Stöße, insbesondere Drehmomentstöße, sowie Schwingungen im Antriebsstrang dämpfen.

Die Verbindungsflansche können jeweils einen Nabenbereich aufweisen, der sich zur drehfesten Verbindung mit der Antriebswelle bzw. mit der getriebenen Welle eignet. Der Nabenbereich kann an einem Innenumfang beispielsweise eine Innenverzahnung für eine formschlüssige Verbindung oder eine bearbeitete zylindrische Fläche für eine Pressverbindung mit der zu verbindenden Welle aufweisen. Ausgehend von dem Nabenbereich eines Verbindungsflansches können sich mehrere Befestigungsabschnitte zur Verbindung mit dem zugeordneten elastischen Ausgleichselement in radialer Richtung erstrecken. So können sich beispielsweise mehrere gleichmäßig über den Umfang verteilte Befestigungsarme von dem Nabenbereich radial nach außen erstrecken. In dem radial äußeren Bereich der Befestigungsarme können diese mittels der Befestigungsmittel mit dem zugeordneten elastischen Ausgleichselement verbunden sein. Die Nabenbereiche der beiden Verbindungsflansche können vorteilhaft radial innerhalb der elastischen Verbindungselemente angeordnet sein, wodurch sich eine in axialer Richtung kurze Bauform der Ausgleichskupplung ergibt.

Im Folgenden wird die Erfindung und deren Vorteile anhand des in den anliegenden Figuren abgebildeten Ausführungsbeispiels noch näher erläutert.

Dabei zeigen
- Fig. 1: eine erfindungsgemäße Ausgleichskupplung in einer Seitenansicht;
- Fig. 2a: ein Mittelstückelement der Ausgleichskupplung aus der Fig. 1 in einer ersten perspektivischen Ansicht;
- Fig. 2b: ein Mittelstückelement der Ausgleichskupplung aus der Fig. 1 in einer zweiten perspektivischen Ansicht;
- Fig. 3: eine perspektivische Ansicht des Mittelstücks der Ausgleichskupplung aus der Fig. 1 und
- Fig. 4: einen Ausschnitt der Ausgleichskupplung aus der Fig. 1 in einer Schnittdarstellung.

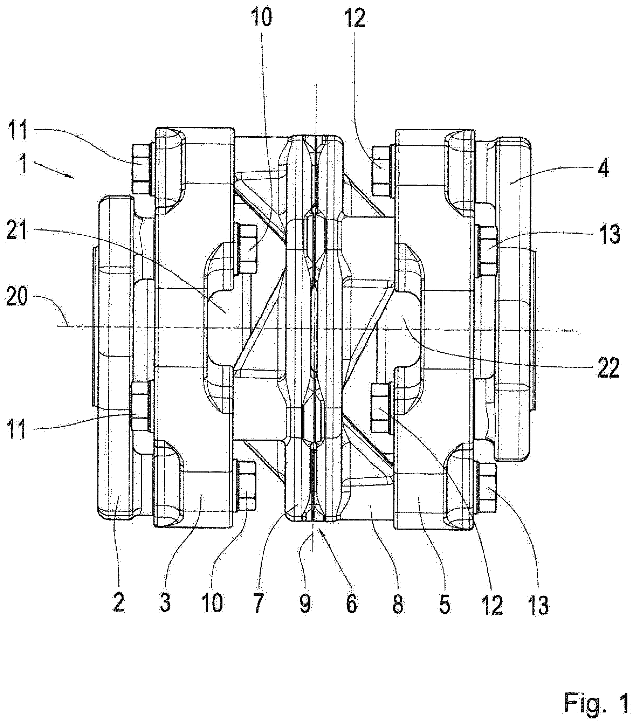

Die in der Fig. 1 dargestellte Ausgleichskupplung 1 ist zum versatzausgleichenden Verbinden zweier Wellen in einem Antriebsstrang eines Schienenfahrzeugs vorgesehen. Sie kann dabei insbesondere im Kraftfluss zwischen einem Antriebsmotor und einem nachgelagerten Getriebe angeordnet werden. Die Ausgleichskupplung 1 soll dabei das Antriebsdrehmoment des Antriebsmotors auf ein Radsatzgetriebe eines Schienenfahrzeugs übertragen und gleichzeitig Verlagerungen ausgleichen. Verlagerungen können in Form von axialen, radialen und winkeligen Versätzen zwischen einer Antriebswelle und einer getriebenen Welle ausgleichen. Im vorliegenden Beispiel entspricht die Antriebswelle der Motorwelle des Antriebsmotors und die getriebene Welle entspricht der Getriebeeingangswelle eines Gangwechselgetriebes. Die Versätze können zumindest teilweise bereits im Stillstand vorliegen. Wesentliche Anteile der Versätze ergeben sich jedoch im Fahrbetrieb, beispielsweise durch Schwingungen im Antriebsstrang des Schienenfahrzeugs.

Die Ausgleichskupplung 1 umfasst einen ersten Verbindungsflansch 2 zur Verbindung mit der Antriebswelle und ein erstes elastisches Ausgleichselement 3, welches mittels erster Flanschverschraubungen 10 mit dem ersten Verbindungsflansch 2 verbunden ist. Die Ausgleichskupplung 1 umfasst ferner einen zweiten Verbindungsflansch 4 zur Verbindung mit einer getriebenen Welle und ein zweites elastisches Ausgleichselement 5, welches mittels zweiter Flanschverschraubungen 12 mit dem zweiten Verbindungsflansch 4 verbunden ist. Jedes der beiden elastischen Ausgleichselemente 3 und 5 ist als eine fadenverstärkte Elastomerscheibe ausgeführt.

Zwischen dem ersten elastischen Ausgleichselement 3 und dem zweiten elastischen Ausgleichselement 5 ist ein Mittelstück 6 angeordnet. Das Mittelstück 6 ist zweiteilig ausgeführt. Es umfasst ein erstes Mittelstückelement 7 und ein zweites Mittelstückelement 8. Die beiden Mittelstückelemente 7 und 8 sind mittels erster Mittelstückverschraubungen 11 und zweiter Mittelstückverschraubungen 13 miteinander verbunden. Die ersten Mittelstückverschraubungen 11 umfassen jeweils eine Schraube, die sich durch das erste elastische Ausgleichselement 3 und durch eine Durchgangsbohrung in dem ersten Mittelstückelement 7 hindurch erstreckt und in einer Gewindebohrung des zweiten Mittelstückelements 8 verschraubt ist. Auf diese Weise halten die ersten Mittelstückverschraubungen 11 die beiden Mittelstücke 7 und 8 zusammen und verbinden diese gleichzeitig mit dem ersten elastischen Ausgleichselement 3. In dementsprechender Weise umfassen auch die zweiten Mittelstückverschraubungen 13 jeweils eine Schraube 23, welche sich durch das zweite elastische Ausgleichselement 5 und durch eine Durchgangsbohrung 14 in dem zweiten Mittelstückelement 8 hindurch erstreckt und in einer Gewindebohrung 15 des ersten Mittelstückelements 7 verschraubt ist.

Einer Flanschverschraubung 10, 12 liegt jeweils eine zugeordnete Mittelstückverschraubung 11, 13 in axialer Richtung gegenüber. Die axiale Richtung bezieht sich auf die Richtung einer Zentralachse 27 der Ausgleichskupplung 1. Die Zentralachse 27 entspricht zumindest annähernd der Rotationsachse des Mittelstücks 6 im Betrieb. Aufgrund der eingangs beschriebenen Versätze zwischen der Antriebswelle und der getriebenen Welle wird das Mittelstück 6 im Betrieb jedoch mit seiner Rotationsachse eine Taumelbewegung ausführen, sodass nicht alle Bauteile der Ausgleichskupplung 1 exakt um die Zentralachse 27 rotieren. Mit der beschriebenen Taumelbewegung des Mittelstücks 6 bewegen sich auch die Mittelstückverschraubungen 11, 13, während sich die elastischen Ausgleichselemente 3 und 5 entsprechend verformen. Aufgrund dieser Bewegungen können die Mittelstückverschraubungen 11 und 13 auch als Lospunkte beschrieben werden. Im Gegensatz dazu können die Flanschverschraubungen 10 und 12 als Festpunkte beschrieben werden, weil sie über die Verbindungsflansche 2 bzw. 4 starr mit der Antriebswelle oder der getriebenen Welle verbunden sind.

Entlang einer Trennstelle zwischen dem ersten Mittelstückelement 7 und dem zweiten Mittelstückelement 8 ist zudem eine Mittelstückebene 9 eingezeichnet, welche orthogonal zu der Zentralachse 27 angeordnet ist. Die Mittelstückebene 9 ist in axialer Richtung also mittig in dem Mittelstück 6 angeordnet. Die einander zugeordneten Flanschverschraubungen 10, 12 und Mittelstückverschraubungen 11, 13 liegen sich jeweils in Bezug auf die Mittelstückebene 9 gegenüber. Ferner ist jeweils eine der Flanschverschraubungen 10, 12 und eine zugeordnete Mittelstückverschraubung 11, 13 zumindest annähernd koaxial zueinander angeordnet.

Anhand der Mittelstückebene 9 kann die Ausgleichskupplung 1 in eine antriebsseitige und eine abtriebsseitige Kupplungshälfte unterteilt werden. Der antriebsseitigen Kupplungshälfte können dabei der erste Verbindungsflansch 2, das erste elastische Ausgleichselement 3, das erste Mittelstückelement 7, die ersten Flanschverschraubungen 10 und die ersten Mittelstückverschraubungen 11 zugeordnet werden. Der abtriebsseitigen Kupplungshälfte können folglich der zweite Verbindungsflansch 4, das zweite elastische Ausgleichselement 5, das zweite Mittelstückelement 7, die zweiten Flanschverschraubungen 10 und die zweiten Mittelstückverschraubungen 13 zugeordnet werden. An der Mittelstückebene 9 können die beiden Kupplungshälften getrennt und wieder miteinander verbunden werden, indem die Mittelstückverschraubungen 11 und 13 aufgeschraubt bzw. verschraubt werden.

In Umfangsrichtung der Ausgleichskupplung 1 sind die ersten Flanschverschraubungen 10 und die ersten Mittelstückverschraubungen 11 abwechselnd angeordnet. Ebenso sind die zweiten Flanschverschraubungen 12 und die zweiten Mittelstückverschraubungen 13 in Umfangsrichtung abwechselnd angeordnet.

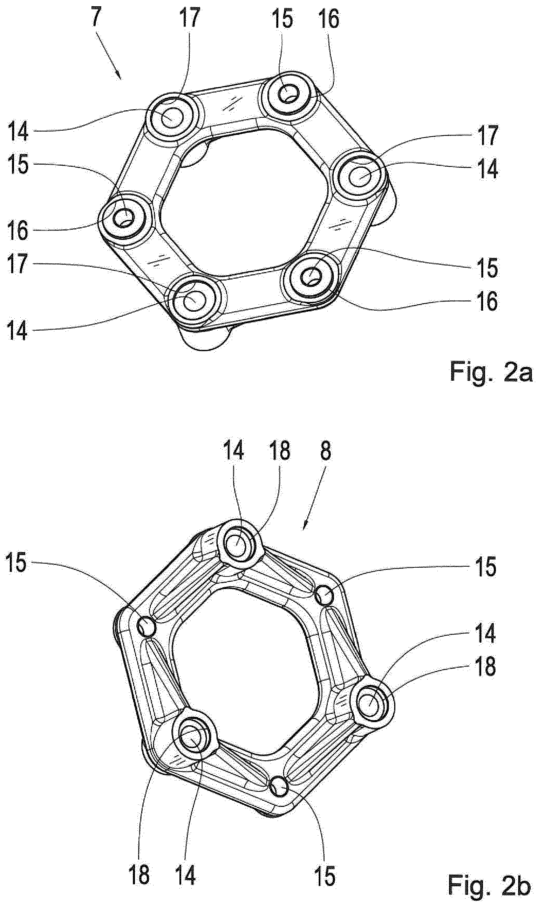

Fig. 2a und Fig. 2b zeigen beide eines der beiden Mittelstückelemente 7 und 8, die im vorliegenden Ausführungsbeispiel identisch ausgebildet sind. Die Fig. 2a zeigt die Seite des Mittelstückelements 7, 8, die im montierten Zustand dem anderen Mittelstückelement 8, 7 der Ausgleichskupplung 1 zugewandt ist. Die Fig. 2b zeigt die Seite des Mittelstückelements 7, 8, die im montierten Zustand dem jeweils zugeordneten elastischen Ausgleichselement 3 bzw. 5 zugewandt ist. Beide Mittelstückelemente 7, 8 weisen jeweils eine sechseckige Grundform auf. In jedem der sechs Eckbereiche jedes sechseckigen Mittelstückelements 7, 8 ist jeweils eine Bohrung vorgesehen. In Umfangsrichtung wechseln sich jeweils eine Durchgangsbohrung 14 mit einer Gewindebohrung 15 der Mittelstückverschraubungen 11, 13 ab.

Das erste Mittelstückelement 7 und das zweite Mittelstückelement 8 weisen erfindungsgemäß formschlüssig ineinanderpassende Formschlusselemente 16, 17 in Form von Zapfen 16 und Senkungen 17 auf. Die Zapfen 16 sind jeweils konzentrisch zu einer zugeordneten Gewindebohrungen 15 ausgeführt, während die Senkungen 17 jeweils konzentrisch zu einer zugeordneten Durchgangsbohrung 14 angeordnet sind. Die Formschlusselemente 16 und 17 sind so ausgeführt, dass der Formschluss durch axiales Auseinanderschieben der beiden Mittelstückelemente 7, 8 trennbar ist. Die Tiefe, mit der die einander zugeordneten Formschlusselemente 16 und 17 im montierten Zustand jeweils ineinandergreifen kann mit der Elastizität der elastischen Ausgleichselementen 3, 5 so abgestimmt sein, dass ein gefordertes maximales Drehmoment über die Formschlusselemente 16, 17 übertragbar ist, dass die erwarteten Versätze zwischen der Antriebswelle und der getriebenen Welle ausgeglichen werden, und dass gleichzeitig eine Trennung des Formschlusses durch axiales Auseinanderschieben im eingebauten Zustand möglich ist. In der Fig. 2b sind weitere Senkungen 18 sichtbar, die erfindungsgemäß jeweils auf der von der Mittelstückebene 9 abgewandten Seite jedes Mittelstückelements 7 und 8 im Bereich der Durchgangsbohrungen 14 angeordnet sind. Diese weiteren Senkungen 18 ermöglichen einen Formschluss mit Buchsen 19, 20, die in dem zugeordneten elastischen Ausgleichselement 3 bzw. 5 angeordnet sind, und gewährleisten so eine sichere Übertragung von hohen Drehmomenten.

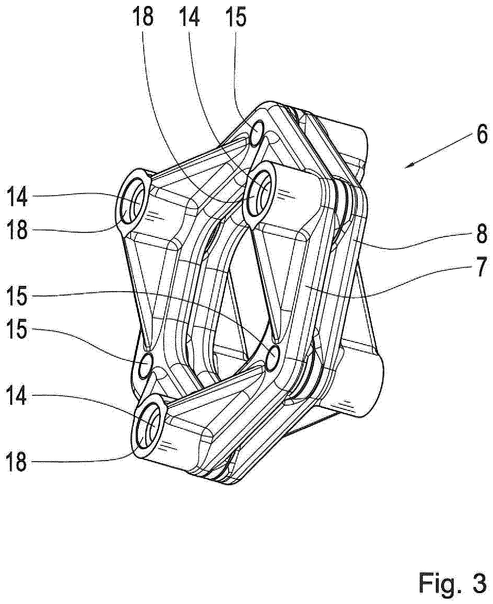

Die Fig. 3 zeigt die beiden zum einem Mittelstück 6 zusammengesetzten Mittelstückelemente 7 und 8 in einer perspektivischen Ansicht. Die Formschlusselemente 16 und 17 sind jeweils zusammengefügt und von außen nicht mehr sichtbar.

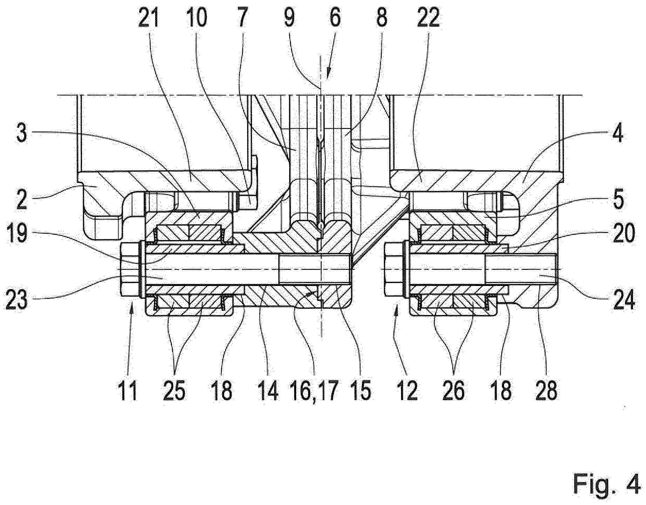

Die Fig. 4 zeigt einen Ausschnitt der Ausgleichskupplung 1 in einer Schnittdarstellung. Im unteren Bereich der Fig. 4 ist eine erste Mittelstückverschraubung 11 und eine zweite Flanschverschraubung 12 sichtbar. Die erste Mittelstückverschraubung 11 und die zweite Flanschverschraubung 12 sind koaxial zueinander angeordnet und liegen sich in Bezug auf die Mittelstückebene 9 gegenüber. Mittels der ersten Mittelstückverschraubung 11 ist das erste elastische Ausgleichselement 3 mit dem Mittelstück 6 verbunden. Das Mittelstück 6 besteht aus den zusammengesetzten ersten und zweiten Mittelstückelementen 7 und 8. Auch die beiden Mittelstückelemente 7 und 8 werden von der ersten Mittelstückverschraubung 11 zusammengehalten.

Eine Schraube 23 und eine Gewindebohrung 15 in dem zweiten Mittelstückelement 8 bilden die wesentlichen Elemente der ersten Mittelstückverschraubung 11. Die Schraube 23 ist durch eine Buchse 19 und durch eine Durchgangsbohrung 14 hindurchgesteckt und in der Gewindebohrung 15 festgeschraubt. Eine Schraube 24 und eine weiter Gewindebohrung 28 in dem zweiten Verbindungsflansch 4 bilden die wesentlichen Elemente der zweiten Flanschverschraubung 12. Die Schraube 24 ist durch eine Buchse 20 in dem elastischen Ausgleichselement 5 hindurchgesteckt und in der weiteren Gewindebohrung 28 festgeschraubt. Die koaxiale Anordnung der sich jeweils zugeordneten Mittelstückverschraubung 11 und Flanschverschraubung 12 ist insbesondere durch die koaxial angeordneten Schrauben 23 und 24 erkennbar.

Die im Bereich der Mittelstückebene 9 angeordneten Formschlusselemente 16 und 17 greifen formschlüssig ineinander und gewährleisten so eine zuverlässige Übertragung auch hoher Drehmomente und Drehmomentspitzen. Die Mittelstückverschraubungen 11 und 13 werden dadurch entlastet und müssen nicht das maximal auftretende Drehmoment übertragen.

Ebenfalls zur sicheren Übertragung hoher Drehmomente tragen die erfindungsgemäßen weiteren Senkungen 18 bei, die jeweils auf der von der Mittelstückebene 9 abgewandten Seite jedes Mittelstückelements 7, 8 im Bereich der Durchgangsbohrungen 14 angeordnet sind. Diese weiteren Senkungen 18 ermöglichen einen Formschluss mit Buchsen 19, 20, die in dem zugeordneten elastischen Ausgleichselement 3 bzw. 5 angeordnet sind, und gewährleisten so eine sichere Übertragung von hohen Drehmomenten. Dementsprechende weitere Senkungen 18 sind zu demselben Zweck auch im Bereich von weiteren Gewindebohrungen 28 an dem ersten und an dem zweiten Verbindungsflansch 2 und 4 angeordnet. Auch hier ermöglichen die weiteren Senkungen 18 einen Formschluss mit den Buchsen 19 bzw. 20 des ersten und zweiten elastischen Ausgleichselements 3 bzw. 5.

An den Schnittflächen des ersten und des zweiten elastischen Ausgleichselements 3 und 5 sind jeweils Fadenpakte 25 bzw. 26 sichtbar, die von einem Elastomerkörper des jeweiligen elastischen Ausgleichselements 3 bzw. 5 umhüllt sind. Die Fadenpakte 25 und 26 sind jeweils um die Buchse 19 bzw. 20 des zugeordneten elastischen Ausgleichselements 3 bzw. 5 herumgeschlungen und können so den wesentlichen Anteil des Drehmomentes von dem jeweiligen Verbindungsflanschübertragen. Gleichzeitig können die elastischen Ausgleichselemente 3 und 5 Schwingungen und Stöße in dem Antriebsstrang dämpfen.

Ein Nabenbereich 21 bzw. 22 jedes Verbindungsflansches 2, 4 erstreckt sich von außen in Richtung der Mittelstückebene 9 radial innerhalb der elastischen Verbindungselemente 3 und 5. Dadurch kann die axiale Abmessung der Ausgleichskupplung 1 sehr klein gehalten werden, wodurch die Ausgleichskupplung 1 auch in sehr beengten Bauraumverhältnissen einsetzbar ist.

### Bezugszeichen

- 1: Ausgleichskupplung
- 2: erster Verbindungsflansch
- 3: erstes elastisches Ausgleichselement
- 4: zweiter Verbindungsflansch
- 5: zweites elastisches Ausgleichselement
- 6: Mittelstück
- 7: erstes Mittelstückelement
- 8: zweites Mittelstückelement
- 9: Mittelstückebene
- 10: erste Flanschverschraubung
- 11: erste Mittelstückverschraubung
- 12: zweite Flanschverschraubung
- 13: zweite Mittelstückverschraubung
- 14: Durchgangsbohrung
- 15: Gewindebohrung
- 16: Formschlusselement, Zapfen
- 17: Formschlusselement, Senkung
- 18: weitere Senkung
- 19: Buchse
- 20: Buchse
- 21: Nabenbereich
- 22: Nabenbereich
- 23: Schraube
- 24: Schraube
- 25: Fadenpaket
- 26: Fadenpaket
- 27: Zentralachse
- 28: weitere Gewindebohrung

## Patentansprüche

1. Ausgleichskupplung (1) zum versatzausgleichenden Verbinden zweier Wellen, insbesondere für den Einsatz in einem Antriebsstrang eines Schienenfahrzeugs,
mit einem ersten Verbindungsflansch (2) zur Verbindung mit einer Antriebswelle,
mit zumindest einem ersten elastischen Ausgleichselement (3), das mit dem ersten Verbindungsflansch (2) verbunden ist,
mit einem zweiten Verbindungsflansch (4) zur Verbindung mit einer getriebenen Welle,
mit zumindest einem zweiten elastischen Ausgleichselement (5), das mit dem zweiten Verbindungsflansch (4) verbunden ist, und
mit einem Mittelstück (6), welches zwischen dem ersten und dem zweiten elastischen Ausgleichselement (3, 5) angeordnet und mit dem ersten und dem zweiten elastischen Ausgleichselement (3, 5) verbunden ist,
wobei das erste elastische Ausgleichselement (3) mittels erster Flanschverschraubungen (10) mit dem ersten Verbindungsflansch (2) und mittels erster Mittelstückverschraubungen (11) mit dem Mittelstück (6) verbunden ist, und
wobei das zweite elastische Ausgleichselement (5) mittels zweiter Flanschverschraubungen (12) mit dem zweiten Verbindungsflansch (4) und mittels zweiter Mittelstückverschraubungen (13) mit dem Mittelstück (6) verbunden ist,
wobei das Mittelstück (6) zumindest ein erstes Mittelstückelement (7) und ein zweites Mittelstückelement (8) aufweist, und dass die beiden Mittelstückelemente (7, 8) mittels der ersten und/oder der zweiten Mittelstückverschraubung (11, 13) miteinander verbunden sind, wobei einer Flanschverschraubung (10, 12) jeweils eine Mittelstückverschraubung (11, 13) gegenüberliegt, **dadurch gekennzeichnet, dass**
das erste Mittelstückelement (7) und das zweite Mittelstückelement (8) jeweils in Umfangsrichtung abwechselnd Durchgangsbohrungen (14) und Gewindebohrungen (15) für die Mittelstückverschraubungen (11, 13) aufweisen, dass jedes elastische Ausgleichselement (3, 5) als eine fadenverstärkte Elastomerscheibe ausgeführt ist, dass das erste Mittelstückelement (7) und das zweite Mittelstückelement (8) formschlüssig ineinanderpassende Formschlusselemente (16, 17) aufweisen,
und dass weitere Senkungen (18) jeweils auf der von einer Mittelstückebene (9) abgewandten Seite jedes Mittelstückelements (7, 8) im Bereich der Durchgangsbohrungen (14) angeordnet sind, sodass die weiteren Senkungen (18) einen Formschluss mit Buchsen (19, 20) ermöglichen, die in dem zugeordneten elastischen Ausgleichselement (3 bzw. 5) angeordnet sind.

2. Ausgleichskupplung (1) nach Anspruch 1, **dadurch gekennzeichnet, dass** die ersten Flanschverschraubungen (10) und die ersten Mittelstückverschraubungen (11) in Umfangsrichtung abwechselnd angeordnet sind, und dass die zweiten Flanschverschraubungen (12) und die zweiten Mittelstückverschraubungen (13) in Umfangsrichtung abwechselnd angeordnet sind.

3. Ausgleichskupplung (1) nach Anspruch 1 oder 2, **dadurch gekennzeichnet, dass** die Formschlusselemente (16, 17) so ausgeführt sind, dass der durch sie gebildete Formschluss durch axiales Auseinanderschieben der beiden Mittelstückelemente (7, 8) trennbar ist.

4. Ausgleichskupplung (1) nach einem der Ansprüche 1 bis 3, **dadurch gekennzeichnet, dass** das erste Mittelstückelement (7) und das zweite Mittelstückelement (8) identisch ausgebildet sind.

5. Ausgleichskupplung (1) nach einem der vorgenannten Ansprüche, **dadurch gekennzeichnet, dass** das erste Mittelstückelement (7) und das zweite Mittelstückelement (7, 8) jeweils zumindest annähernd polygonförmig ausgestaltet ist, und dass in den Eckbereichen jedes polygonförmigen Mittelstückelements (7, 8) jeweils eine der Durchgangsbohrungen (14) oder eine der Gewindebohrungen (15) angeordnet ist.

## Claims

1. A compensating coupling (1) for connecting two shafts with offset compensation, specifically for use in a drive train of a rail vehicle, having a first connecting flange (2) for connecting to a drive shaft, having at least one first elastic compensating element (3) connected to the first connecting flange (2),
having a second connecting flange (4) for connecting to a driven shaft,
having at least one second elastic compensating element (5) connected to the second connecting flange (4), and
having a central part (6) disposed between the first and second elastic compensating elements (3, 5) and connected to the first and second elastic compensating elements (3, 5),
wherein the first elastic compensating element (3) is connected to the first connecting flange (2) via first flange fittings (10) and is connected to the central part (6) via first central part fittings (11), and
wherein the second elastic compensating element (5) is connected to the second connecting flange (4) via second flange fittings (12) and is connected to the central part (6) via second central part fittings (13),
wherein the central part (6) has at least a first central part element (7) and a second central part element (8), and the two central part elements (7, 8) are connected to one another via the first and/or second central part fittings (11, 13), wherein the flange fittings (10, 12) each are opposite a respective central part fitting (11, 13), **characterised in that**
the first central part element (7) and the second central part element (8) each have circumferentially alternating through bores (14) and threaded bores (15) for the central part fittings (11, 13), that each elastic compensating element (3, 5) is configured as a fibre-reinforced elastomeric disc, that the first central part element (7) and the second central part element (8) have form-fitting elements (16, 17) positively fitting into one another,
and that further counterbores (18) are each disposed in the region of the through bores (14) on the side of each central part element (7, 8) facing away from a central part plane (9) such that the further counterbores (18) allow for positively fitting with sockets (19, 20) disposed in the associated elastic compensating element (3 and 5, respectively).

2. The compensating coupling (1) according to claim 1, **characterised in that** the first flange fittings (10) and the first central part fittings (11) are circumferentially disposed alternately, and that the second flange fittings (12) and the second central part fittings (13) are circumferentially disposed alternately.

3. The compensating coupling (1) according to claim 1 or 2, **characterised in that** the form-fitting elements (16, 17) are configured such that the positive fit formed by them is separatable by axially sliding the two central part elements (7, 8) away from one another.

4. The compensating coupling (1) according to any one of claims 1 to 3, **characterised in that** the first central part element (7) and the second central part element (8) are constructed identically.

5. The compensating coupling (1) according to any one of the preceding claims, **characterised in that** the first central part element (7) and the second central part element (7, 8) are each designed to be at least approximately polygon-shaped, and that a respective one of the through bores (14) or the threaded bores (15) is disposed in the corner regions of each polygon-shaped central part element (7, 8).

## Revendications

1. Accouplement compensateur (1) pour la liaison à compensation de décalage de deux arbres, notamment destiné à être utilisé dans une chaîne cinématique de véhicule ferroviaire, comportant une première bride de liaison (2) destinée à être reliée à un arbre d'entraînement, et au moins un premier élément de compensation élastique (3) relié à la première bride de liaison (2),
avec une deuxième bride de raccordement (4) pour le raccordement à un arbre mené,
avec au moins un deuxième élément de compensation élastique (5) qui est relié à la deuxième bride de liaison (4), et
avec une pièce centrale (6) qui est disposée entre le premier et le deuxième élément de compensation élastique (3, 5) et est reliée au premier et au deuxième élément de compensation élastique (3, 5),
dans lequel le premier élément de compensation élastique (3) est relié à la première bride de liaison (2) au moyen de premières connexions à vis de bride (10) et à la pièce centrale (6) au moyen de premières connexions à vis de pièce centrale (11), et dans lequel le deuxième élément de compensation élastique (5) est relié à la deuxième bride de liaison (4) au moyen de deuxièmes connexions à vis de bride (12) et à la pièce centrale (6) au moyen de deuxièmes connexions à vis de pièce centrale (13),
dans lequel la pièce centrale (6) comporte au moins un premier élément central (7) et un deuxième élément central (8), et que les deux éléments centraux (7, 8) sont reliés l'un à l'autre au moyen des premières et/ou deuxièmes connexions à vis de pièce centrale (11, 13), un assemblage à vis à bride (10, 12) étant opposé à un assemblage à vis de pièce centrale (11, 13), **caractérisé en ce que**
le premier élément central (7) et le deuxième élément central (8) présentent chacun des trous traversants (14) et des trous filetés (15) pour les connexions à vis de pièce centrales (11, 13) alternées dans la direction circonférentielle, que chaque élément de compensation élastique (3, 5) est conçu comme un disque élastomère renforcé par des fils, que le premier élément central (7) et le deuxième élément central (8) présentent des éléments de complémentarité de forme (16, 17) emboîtables,
et que d'autres fraisures (18) sont disposées sur le côté de chaque élément de pièce centrale (7, 8) opposé à un plan de pièce centrale (9) dans la région des trous traversants (14), de sorte que les autres fraisures (18) permettent une liaison positive avec des douilles (19, 20) qui sont disposées dans l'élément de compensation élastique associé (3 ou 5).

2. Accouplement compensateur (1) selon la revendication 1, **caractérisé en ce que** les premières connexions à vis à bride (10) et les premières connexions à vis de pièce centrale (11) sont disposés en alternance dans la direction circonférentielle, et **en ce que** les deuxièmes connexions à vis à bride (12) et les deuxièmes connexions à vis de pièce centrale (13) sont disposées en alternance dans la direction circonférentielle.

3. Accouplement compensateur (1) selon la revendication 1 ou 2, **caractérisé en ce que** les éléments de liaison par verrouillage de forme (16, 17) sont conçus de telle sorte que la liaison par verrouillage de forme qu'ils forment peut être séparée en écartant axialement les deux éléments centraux (7, 8).

4. Accouplement compensateur (1) selon l'une des revendications 1 à 3, **caractérisé en ce que** le premier élément central (7) et le deuxième élément central (8) sont identiques.

5. Accouplement compensateur (1) selon l'une quelconque des revendications précédentes, **caractérisé en ce que** le premier élément central (7) et le deuxième élément central (7, 8) sont chacun au moins approximativement de forme polygonale, et **en ce que** l'un des trous traversants (14) ou l'un des trous filetés (15) est disposé dans les zones d'angle de chaque élément central (7, 8) de forme polygonale.
